# DEMANDE DE BREVET EUROPEEN

(11) **EP 3 480 439 A1**
(43) Date de publication de la demande: **08.05.2019**
(21) Numéro de dépôt: 18204613.6
(22) Date de dépôt: 06.11.2018
(51) Int. Cl.: F02B 29/04, F02M 35/10

(54) **CIRCUIT D'ADMISSION D'AIR POUR MOTEUR À ALLUMAGE COMMANDÉ AVEC PLENUM INTÉGRÉ À LA CULASSE**

(30) Priorité: 06.11.2017 FR 1760394
(71) Demandeur: RENAULT s.a.s., 92100 Boulogne-Billancourt (FR)
(72) Inventeur: VENEZIANI, Thomas, 75015 PARIS (FR)

(57) **Abrégé**

Circuit d'admission d'air (5) pour un moteur (2) à allumage commandé, ledit circuit d'admission d'air (5) étant destiné à être positionné entre un élément de compression d'air et au moins une partie supérieure (8) de chambre de combustion creusée dans une culasse (3) du moteur (2), ledit circuit d'admission d'air (5) comprenant la culasse (3), un échangeur thermique (20), un répartiteur d'admission d'air, et au moins une conduite d'admission d'air (10), caractérisé en ce que le répartiteur d'admission d'air comprend un plénum (13) formé au moins partiellement par un évidement dans la culasse (3), l'évidement étant recouvert par une bouche de sortie (28) d'air de l'échangeur thermique (20).

## Description

### Domaine technique de l'invention

La présente invention concerne un circuit d'admission d'air pour moteur à allumage commandé. L'invention concerne également un moteur à allumage commandé comprenant un tel un circuit d'admission d'air. Enfin, l'invention concerne un véhicule automobile comprenant un tel circuit d'admission d'air ou un tel moteur à allumage commandé.

### État de la technique

Afin de respecter les normes internationales d'émissions des moteurs à allumage commandé, notamment des moteurs à essence, les constructeurs automobiles cherchent à optimiser la combustion du carburant, notamment de l'essence, au sein des chambres de combustion du moteur. Dans cette optique, le circuit d'admission d'air doit respecter certaines contraintes : de l'air frais doit être apporté dans chaque chambre de combustion en quantité maîtrisée et tout en générant une turbulence aérodynamique.

Pour améliorer l'efficacité du moteur, il est connu d'intégrer un élément de compression d'air dans le circuit d'admission d'air du moteur. Cet élément de compression peut être un compresseur d'un turbocompresseur disposé entre un filtre à air et un répartiteur d'admission d'air du moteur. Cependant après compression, l'air d'admission s'est réchauffé ce qui est néfaste à l'efficacité du moteur.

Pour apporter de l'air frais, un échangeur thermique est agencé dans le circuit d'admission d'air, en amont du moteur, pour refroidir l'air compressé qui entre dans les chambres de combustion.

Pour maîtriser la quantité d'air injectée dans chaque cylindre, l'air est collecté dans le répartiteur d'admission d'air puis distribué dans chaque chambre de combustion par des conduites d'admission d'air traversant la culasse du moteur. Le répartiteur d'admission d'air comprend un boîtier papillon, un volume d'air tampon, également dénommé plénum, et au moins autant de conduites d'admission d'air que de cylindres. Le répartiteur d'admission d'air, également dénommé collecteur d'admission d'air, peut être par exemple une pièce de fonderie ou une pièce en plastique fixée contre la culasse.

Le répartiteur d'admission et les conduites d'admission sont aptes à générer des turbulences aérodynamiques dans la chambre de combustion afin de mélanger idéalement l'essence à l'air pour obtenir une combustion efficace. Pour générer ces turbulences aérodynamiques, la géométrie et l'orientation des conduites d'admission d'air par rapport à la chambre de combustion jouent un rôle primordial.

Le collecteur d'admission d'air et l'échangeur thermique s'ajoutent à d'autres équipements fixés sur le moteur. L'ensemble de ces équipements rend le moteur à essence particulièrement complexe à assembler et particulièrement volumineux.

### Objet de l'invention

Le but de l'invention est de fournir un circuit d'admission d'air pour moteur à allumage commandé, notamment pour moteur à essence, remédiant aux inconvénients ci-dessus et améliorant les circuits d'admission d'air pour moteur à allumage commandé connus de l'art antérieur. En particulier, l'invention permet de réaliser un circuit d'admission d'air pour moteur à allumage commandé et un moteur à allumage commandé comprenant une tel circuit d'admission d'air qui soient compacts, facile à assembler, qui permettent de générer des turbulences aérodynamiques optimisant la combustion du carburant, et qui permettent de limiter les pertes de charge des flux d'air.

L'invention se rapporte à un circuit d'admission d'air pour un moteur à allumage commandé, ledit circuit d'admission d'air étant destiné à être positionné entre un élément de compression d'air et au moins une partie supérieure de chambre de combustion creusée dans une culasse du moteur, ledit circuit d'admission d'air comprenant la culasse, un échangeur thermique, un répartiteur d'admission d'air, et au moins une conduite d'admission d'air, le répartiteur d'admission d'air comprenant un plenum formé au moins partiellement par un évidement dans la culasse, l'évidement étant recouvert par une bouche de sortie d'air de l'échangeur thermique.

L'évidement peut être fermé de façon étanche à l'air par la bouche de sortie de l'échangeur thermique.

Le volume de l'évidement peut être supérieur ou égal au quart d'une cylindrée du moteur, voire supérieur ou égal au tiers d'une cylindrée du moteur.

Le plenum comprenant au moins une paroi munie d'un déflecteur apte à dévier un flux d'air vers l'au moins une conduite d'admission d'air.

La culasse peut être destinée à être fixée à un bloc-cylindres d'un moteur selon un plan de joint de culasse, l'au moins une partie supérieure de chambre de combustion débouchant dans le plan de joint culasse, et le déflecteur peut être formé par une paroi d'extrémité aval du plenum, sensiblement plane et inclinée par rapport au plan de de joint culasse.

La paroi d'extrémité aval peut comprendre une partie inférieure de laquelle débouche l'au moins une conduite d'admission d'air.

L'au moins une conduite d'admission d'air peut s'étendre selon un premier axe et le déflecteur peut être formé par une paroi d'extrémité aval du plenum sensiblement plane et inclinée par rapport à un plan perpendiculaire au premier axe de sorte à diriger un flux d'air vers l'au moins une conduite d'admission d'air.

L'au moins une conduite d'admission d'air peut s'étendre selon un premier axe et la culasse peut être destinée à être fixée à un bloc-cylindres d'un moteur selon un plan de de joint culasse, l'au moins une partie supérieure de chambre de combustion débouchant dans le plan de de joint culasse, le premier axe formant avec le plan de de joint culasse un angle non nul, notamment pour créer une turbulence d'air de type « tumble » dans l'au moins une partie supérieure de chambre de combustion.

L'échangeur thermique peut comprendre un circuit d'eau.

L'échangeur thermique peut être directement fixé contre la culasse, notamment l'échangeur thermique peut comprendre une bride fixée contre la culasse.

L'invention se rapporte également à un moteur à allumage commandé comprenant un circuit d'admission d'air tel que défini précédemment.

Le volume de l'échangeur thermique peut être sensiblement égal à une cylindrée du moteur.

L'invention se rapporte également à un véhicule automobile comprenant un circuit d'admission d'air tel que défini précédemment et/ou un moteur à allumage commandé tel que défini précédemment.

Enfin, l'invention se rapporte également à une culasse pour moteur à essence comprenant au moins une conduite d'admission d'air débouchant dans au moins une partie supérieure de chambre de combustion, la culasse comprenant au moins une première partie d'un plenum en amont de l'au moins une conduite d'admission d'air.

### Description sommaire des dessins

Ces objets, caractéristiques et avantages de la présente invention seront exposés en détail dans la description suivante d'un mode de réalisation particulier, assorti de variantes, fait à titre non-limitatif en relation avec les figures jointes parmi lesquelles :
La figure 1 est une vue d'un véhicule automobile selon un mode de réalisation de l'invention.
La figure 2 est une vue schématique de côté d'un moteur selon un mode de réalisation de l'invention.
La figure 3 est une vue schématique de dessus du moteur.
La figure 4 est une vue schématique d'une culasse selon une première variante de réalisation de l'invention.
La figure 5 est une vue schématique d'une culasse selon une deuxième variante de réalisation de l'invention.
La figure 6 est une vue schématique d'une culasse selon une troisième variante de réalisation de l'invention.
La figure 7 est une vue schématique du moteur selon une première variante d'agencement du plénum.
La figure 8 est une vue schématique du moteur selon une deuxième variante d'agencement du plénum.
La figure 9 est une vue schématique d'une turbulence aérodynamique à l'intérieur d'une chambre de combustion

### Description de modes préférentiels de l'invention

Dans la description qui va suivre, les termes « amont et « aval » font référence au sens de propagation de l'air au sein du moteur, l'air se propageant de l'amont vers l'aval. Les termes inférieurs et supérieurs se rapportent à l'axe vertical. On considère un moteur positionné de sorte que ses cylindres soient parallèles à l'axe vertical mais l'invention pourrait être transposée à un moteur dont les cylindres ne sont pas disposés verticalement.

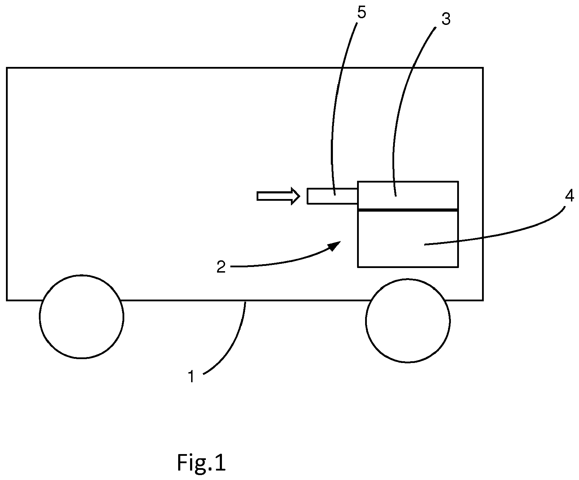

La figure 1 illustre un véhicule 1 automobile comprenant un moteur 2 à allumage commandé selon un mode de réalisation de l'invention. Le moteur peut être par exemple un moteur à injection directe fonctionnant avec de l'essence ou avec un dérivé ou équivalent de l'essence tel qu'un éthanol, un biocarburant, du gaz naturel pour véhicule ou du gaz de pétrole liquéfié. Le moteur comprend notamment une culasse 3 surmontant un bloc-cylindres 4, également parfois dénommé « bloc-moteur » ou « carter ». Le moteur 2 comprend également un circuit d'admission d'air 5 par lequel de l'air entre dans des chambres de combustion du moteur depuis l'extérieur.

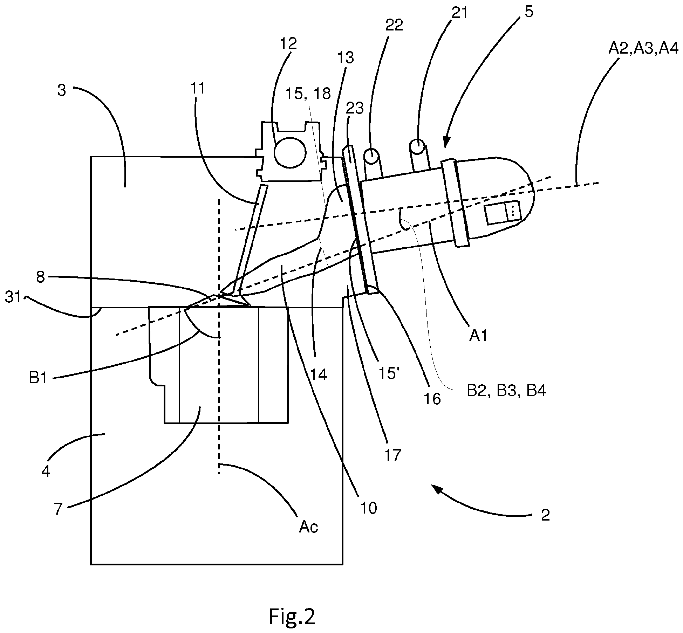

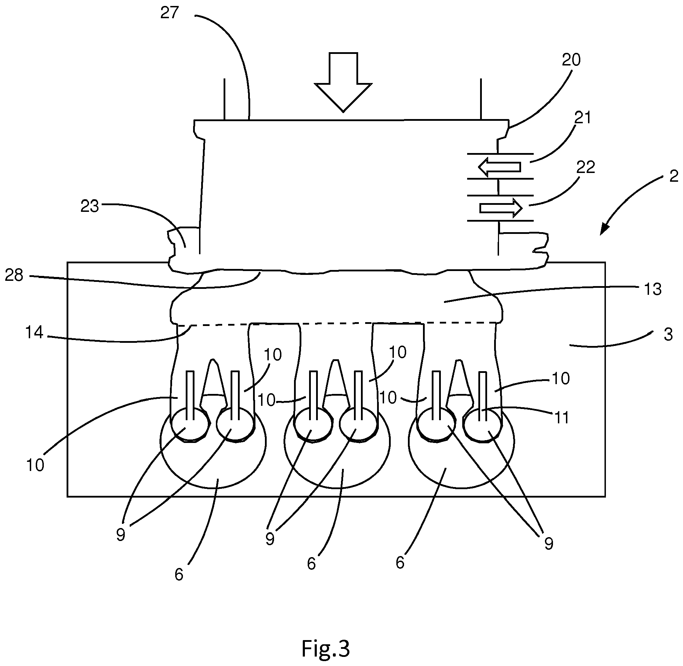

Les figures 2 et 3 illustrent plus précisément le moteur 2 à allumage commandé. Le moteur comprend trois cylindres 6 mais en variante, il pourrait comprendre un nombre quelconque de cylindres, par exemple quatre ou six cylindres.

Le circuit d'admission d'air 5 comprend la culasse 3, un échangeur thermique 20, un répartiteur d'admission d'air, et au moins une conduite d'admission d'air 10. Le circuit d'admission d'air 5 est positionné en aval d'un élément de compression d'air, notamment un compresseur de turbocompresseur (non représenté). Le répartiteur d'admission d'air comprend un plenum 13 formé par un évidement dans la culasse 3.

Le bloc-cylindres 4 comprend trois chambres de combustion 7 de forme globalement cylindrique. La culasse 3 comprend trois parties supérieures 8 desdites chambres de combustion, dans chacune desquelles sont agencées deux ouvertures d'admission d'air 9 communiquant avec les conduites d'admission d'air 10. Ledit circuit d'admission d'air 5 est donc positionné en amont des parties supérieures 8 de chambre de combustion. Des soupapes d'admission d'air 11 mises en mouvement par un arbre à cames 12 sont aptes à obturer les ouvertures d'admission d'air 9.

Les parties supérieures 8 desdites chambres de combustion comprennent une forme circulaire, notamment une forme conique, et constituent l'extrémité supérieure des chambres de combustion 7. Des injecteurs, des bougies d'allumage ou encore des ouvertures d'échappement peuvent également être aménagés dans les parties supérieures 8 desdites chambres de combustion 8. On définit pour chaque partie supérieure 8 un axe de chambre de combustion Ac confondu avec l'axe du cylindre 6. L'axe de chambre de combustion Ac est perpendiculaire à un plan de joint de culasse 31 délimitant la culasse 3 du bloc-cylindres 4. En particulier, lorsque le véhicule repose sur un sol horizontal, l'axe de chambre de combustion peut être vertical et le plan de joint de culasse 31 peut être horizontal.

Les conduites d'admission d'air 10 sont des ouvertures de section sensiblement constante aménagées entièrement dans la culasse. En aval, elles débouchent dans les parties supérieures 8 desdites chambres de combustion via les ouvertures d'admission d'air 9. En amont, les conduites d'admission d'air sont reliées au sein de la culasse 3 au plenum 13. Les conduites d'admission d'air, également dénommées « conduites primaires » permettent d'homogénéiser la vitesse de l'air avant son entrée dans les chambres de combustion. La longueur des conduites d'admission d'air 10 peut être par exemple comprise entre 50 mm et 100 mm. La section des conduites d'admission d'air peut être par exemple comprise entre 2.5 et 20 mm².

Le plenum 13 est un volume tampon contenant de l'air prêt à être aspiré dans une ou plusieurs chambres de combustion 7 lorsque les soupapes d'admission d'air 11 s'ouvrent. Selon l'invention, le plenum 13 est réalisé par un évidement dans la culasse 3. L'évidement comprend des parois latérales sensiblement parallèles au sens d'écoulement de l'air et une paroi d'extrémité aval 15 dans laquelle débouchent les conduites d'admission d'air 10. Lors de l'ouverture des soupapes d'admission d'air 11, une onde de pression parcourt les conduites d'admission d'air 10 et le plenum 13. Ces ondes de pression peuvent provoquer des vibrations et/ou influer sur le remplissage en air des cylindres. La forme et le volume des conduites d'admission d'air 10 et du plenum 13 impactent les ondes de pression pour un régime de moteur donné ainsi que les mouvements aérodynamiques dans la chambre de combustion et la perte de charge du flux d'air. La forme et le volume des conduites d'admission d'air 10 et du plenum 13 sont donc adaptés à chaque moteur en fonction de l'utilisation souhaitée et, en particulier, pour réduire de façon optimale les pertes de charge au passage de l'air d'admission. De ce fait, les conduites primaires sont, de manière préférentielle, droites avec une évolution de la section de passage, par exemple avec une forme conique. Elles sont notamment inclinées selon une rampe droite, c'est-à-dire avec une inclinaison uniforme en direction des parties supérieures 8 desdites chambres de combustion.

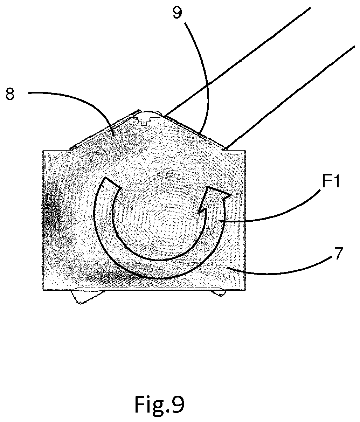

Chaque conduite d'admission d'air s'étend sensiblement selon un premier axe A1. Le premier axe A1 forme avec l'axe de chambre de combustion Ac un angle B1 supérieur ou égal à 45°, voire supérieur ou égal à 60°. Chaque conduite d'admission d'air débouche dans sa partie supérieure de chambre de combustion 8 respective de manière sensiblement tangente à la chambre de combustion. Le premier axe A1 n'est pas parallèle au plan de joint de culasse 31. Autrement dit, le premier axe A1 forme avec le plan de joint de culasse 31 un angle non nul. Cette orientation est particulièrement favorable à la formation d'une perturbation aérodynamique de type « tumble » à l'intérieur de la chambre de combustion : lorsque les soupapes d'admission d'air s'ouvrent, l'air s'engouffre dans le cylindre en générant un tourbillon dont l'axe est perpendiculaire à l'axe de chambre de combustion Ac. Une telle turbulence aérodynamique est notamment illustrée sur la figure 9. Une flèche F1 indique l'orientation de la turbulence. Ce type de perturbation aérodynamique permet d'obtenir une combustion efficace du carburant injectée dans la chambre de combustion.

La paroi d'extrémité aval 15 de la culasse comprend des entrées 14 des différentes conduites d'admission d'air 10. Ces entrées 14 sont matérialisées sur les figures 2 et 3 par un trait en pointillés. Le plenum 13 comprend également une entrée 15' disposée sur un coté 16 de la culasse, en vis-à-vis de la paroi d'extrémité aval. Pour définir le volume du plenum au niveau de son entrée 15', on peut considérer un prolongement naturel du profil de la culasse 3 autour de l'entrée 15'. La cylindrée du moteur est définie par le volume balayé par le déplacement des pistons dans leurs cylindres respectifs. Avantageusement, le volume du plenum est supérieur ou égal à la cylindrée du moteur divisé par quatre, voire supérieur ou égal à la cylindrée du moteur divisé par trois.

Selon l'invention la paroi d'extrémité aval 15 est sensiblement plane. Les entrées 14 des différentes conduites d'admission débouchent dans une partie inférieure de la paroi d'extrémité aval 15. De manière avantageuse, la paroi d'extrémité aval 15 est inclinée par rapport par rapport à un plan perpendiculaire au premier axe A1 et également inclinée par rapport au plan de de joint culasse 31. Ainsi, la paroi d'extrémité aval 15 forme un déflecteur 18 apte à diriger les flux d'air vers les entrées 14 des différentes conduites d'admission d'air 10. La convergence des flux d'air depuis le plenum vers les chambres de combustion est ainsi favorisée et les pertes de charge des flux d'air sont minimisées.

On peut définir un deuxième axe A2 comme l'axe perpendiculaire à la surface dessinée par l'entrée du plenum 13. Un angle B2 formé entre le premier axe A1 et le deuxième axe A2 est inférieur ou égal à 30°. A cet effet, le côté 16 de la culasse sur lequel débouche le plenum peut être avantageusement incliné par rapport à d'autres côtés de la culasse ou par rapport au prolongement naturel du bloc-cylindres 4 en contrebas de la culasse. La culasse peut donc comprendre une excroissance 17 dans laquelle est aménagée le plenum ou une partie du plenum.

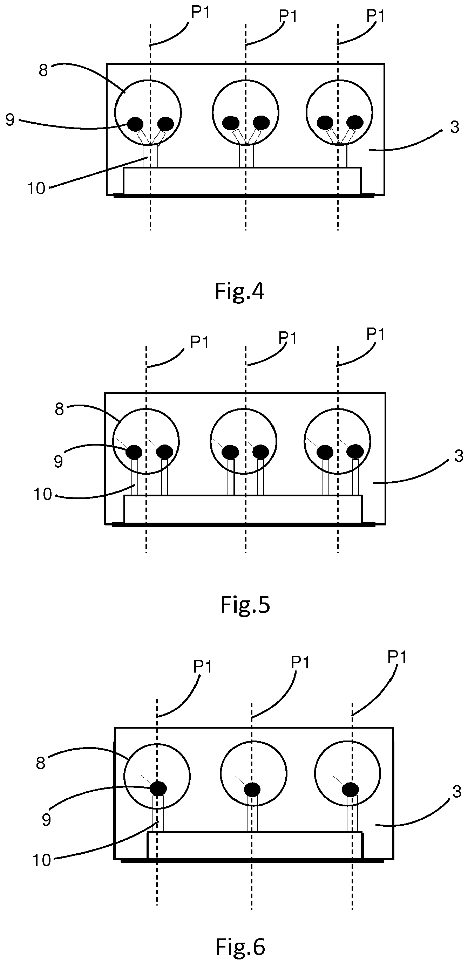

Les figures 4, 5 et 6 illustrent trois variantes de réalisation de la culasse 3.

Dans une première variante de réalisation de la culasse, illustrée sur la figure 4, la culasse comprend deux ouvertures d'admission d'air 9 dans chaque partie supérieure 8 de chambre de combustion. Chaque conduite d'admission d'air 10 comprend une ramification en forme de «Y» débouchant dans ses deux ouvertures d'admission d'air respectives. Il y a donc trois conduites d'admission d'air 10 comprenant chacune une entrée et deux sorties. Une telle configuration est également observable sur la figure 3.

Dans une deuxième variante de réalisation de la culasse, illustrée sur la 5, la culasse comprend également deux ouvertures d'admission d'air 9 dans chaque partie supérieure 8 de chambre de combustion. Des conduites d'admission d'air 10 indépendantes débouchent chacune dans une ouverture d'admission d'air 9. Il y a donc six conduites d'admission d'air 10 comprenant chacune une entrée et une sortie.

Dans une troisième variante de réalisation de la culasse, illustrée sur la 6, chaque partie supérieur de chambre combustion comprend une unique ouverture d'admission d'air 9. Des conduites d'admission d'air 10 indépendantes débouchent chacune dans une ouverture d'admission d'air 9. Il y a donc trois conduites d'admission d'air 10 comprenant chacune une entrée et une sortie.

En remarque, de préférence, on note que quelle que soit la variante de réalisation, l'admission d'air est structurée symétriquement selon un plan P1 vertical et médian de chaque partie supérieure 8 de chambre de combustion. Ainsi, le flux d'air entrant dans la chambre de combustion est équilibré de part et d'autre du plan P1. Aucune turbulence aérodynamique ne s'établit autour de l'axe de chambre de combustion Ac. Les turbulences aérodynamiques s'établissent donc uniquement autour d'un axe perpendiculaire à l'axe de chambre de combustion Ac. Les turbulences sont bien de type « tumble »comme illustré sur la figure 9.

L'échangeur thermique 20 est positionné en amont de la culasse (et donc également en amont du plenum intégré à la culasse). L'échangeur thermique 20 se présente sous la forme d'un boitier muni d'un circuit d'eau. L'échangeur thermique comprend une bouche d'entrée 27 d'air et une bouche de sortie 28 d'air. Le circuit d'eau comprend une entrée 21 et une sortie 22. Grâce à sa grande capacité calorifique, l'eau est capable de refroidir efficacement l'air qui traverse l'échangeur thermique. Un tel échangeur est couramment dénommé par son abréviation anglaise WCAC signifiant « water charge air cooler », soit « refroidisseur d'air de suralimentation à eau ». Le volume de l'échangeur thermique 20 est sensiblement égal à la cylindrée du moteur. Par « sensiblement égal », on comprend que le volume utile d'air contenu à l'intérieur de l'échangeur thermique est égal à la cylindrée du moteur plus ou moins 20 %. En variante, l'échangeur thermique pourrait être d'autre nature, par exemple un échangeur thermique avec un refroidissement par air. L'échangeur thermique 20 comprend une bride 23 de fixation fixée (par exemple vissée) directement contre le côté 16 de la culasse. La liaison entre l'échangeur thermique 20 et la culasse 3, notamment entre la bouche de sortie 28 et la culasse 3, est étanche. L'échangeur thermique débouche donc directement dans le plenum 13 sans que l'air transite par une conduite. En amont de l'échangeur thermique 20, l'air est apporté par une conduite d'air 24. Un papillon des gaz 25 aménagé dans la conduite d'air 24 permet de réguler le débit d'air dans le moteur.

La bouche de sortie 28 est orientée selon un troisième axe A3 et la bouche d'entrée 27 est orientée selon un quatrième axe A4. Un angle B3 formé entre le premier axe A1 et le troisième axe A3 est inférieur ou égal à 30°. Un angle B4 formé entre le premier axe A1 et le quatrième axe A4 est inférieur ou égal à 30°. En l'occurrence, selon les modes de réalisation présentés, l'entrée d'air et la sortie d'air de l'échangeur thermique sont parallèles entre elles et parallèles à l'entrée 15' du plenum. Le deuxième axe A2, le troisième axe A3 et le quatrième axe A4 sont donc confondus. Les angles B2, B3 et B4 sont donc identiques. La bouche de sortie 28 de l'échangeur est fixée à la culasse de façon étanche à l'air et la section de passage de ladite bouche de sortie 28 est directement connectée au plenum. Ainsi de façon avantageuse, le répartiteur d'admission d'air est formé par l'évidement dans la culasse recouvert par l'échangeur.

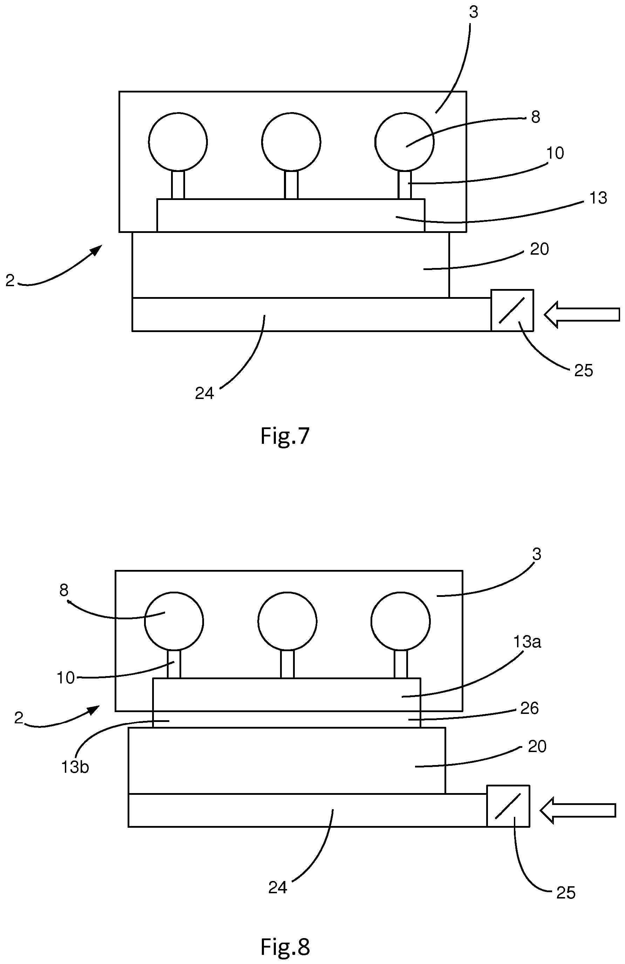

Les figures 7 et 8 illustrent deux variantes d'agencement du plenum. Dans une première variante d'agencement, illustrée sur la figure 7, la totalité du plenum est intégré à la culasse. Dans une deuxième variante d'agencement, illustrée sur la figure 8, seule une première partie 13a du plenum est intégrée à la culasse. Le circuit d'admission d'air 5 comprend une interface 26 intercalée entre la culasse 3 et l'échangeur thermique 20 délimite une deuxième partie 13b de plenum. La première partie 13a de plenum communique avec la deuxième partie 13b de plenum. La première partie 13a de plenum et la deuxième partie 13b de plenum sont complémentaires et forment ensemble le plenum. L'interface 26 peut être un élément distinct de la culasse et de l'échangeur thermique, par exemple une pièce tubulaire positionnée entre la culasse et l'échangeur thermique. Alternativement, l'échangeur thermique 20 et l'interface 26 peuvent former un ensemble unique comprenant la deuxième partie 13b du plénum. Autrement dit, l'échangeur thermique 20 peut intégrer l'interface 26 : l'air contenu à l'intérieur de l'échangeur thermique, notamment à proximité de la sortie de l'échangeur thermique, peut constituer la deuxième partie 13b du plénum. Le plenum est en aval de l'échangeur thermique, voire en aval et partiellement dans l'échangeur thermique. Toutefois, aucune partie du plenum ne se situe en amont de l'échangeur thermique. L'interface et l'échangeur thermique ne comprennent pas de conduits de répartition dirigés vers l'une ou l'autre des chambres de combustion. La répartition de l'air dans les chambres de combustion est réalisée dans la culasse au niveau de la jonction entre les conduites d'admission d'air 10 et la première partie de plenum 13a.

On note que les variantes d'agencement de l'échangeur thermique peuvent être librement combinées avec les variantes de réalisation de la culasse décrite plus haut.

Lorsque le moteur fonctionne, de l'air chaud arrive dans l'échangeur thermique 20 via la conduite d'air 24 et le papillon des gaz 25. L'air est refroidit par l'échangeur thermique 20 puis pénètre directement dans le plenum 13. Lorsque les soupapes d'admission d'air 11 s'ouvrent l'air contenu dans le plenum est aspiré dans la chambre de combustion. La forme des conduites d'admission d'air confèrent au mouvement de l'air une turbulence de type « tumble » qui se mélange au carburant. Une combustion optimale du mélange d'air et du carburant peut avoir lieu. Entre la conduite d'air 24 et la chambre de combustion 7, l'air a transité par l'échangeur thermique 20, le plenum 13 et les conduites d'admission d'air 10 sans effectuer de changement de direction important. L'écoulement de l'air est donc facilité et la perte de charge de l'air est faible.

L'échangeur thermique est fixé directement contre la culasse ou tout au moins à proximité de la culasse. Cet ensemble est donc particulièrement compact. Le porte-à-faux lié à la fixation de l'échangeur thermique sur la culasse est également très faible. L'ensemble formé par la culasse et l'échangeur thermique est également particulièrement rigide ce qui réduit l'amplitude des déplacements relatifs de ces pièces lorsqu'elles sont soumises à des vibrations.

Dans les différents modes de réalisation et variantes, le plenum est avantageusement réalisé au moins en partie par un premier volume aménagé dans la culasse. Ce premier volume est délimité par les parois latérales de la culasse, la paroi d'extrémité aval comprenant les entrées des conduits d'admission et un plan de la culasse prévu pour la fixation du reste du circuit d'admission. Ce premier volume n'est pas destiné à recevoir des pièces lorsque le moteur est assemblé, mais à former une première partie de plenum.

Une deuxième partie de plenum, complémentaire à la première partie pour former ensemble le plenum, peut être prévue au niveau d'un ou plusieurs autres éléments du circuit d'admission d'air 5 formant en amont du premier volume, un deuxième volume. Ce deuxième volume se trouve dans la continuité du premier volume.

## Revendications

1. Circuit d'admission d'air (5) pour un moteur (2) à allumage commandé, ledit circuit d'admission d'air (5) étant destiné à être positionné entre un élément de compression d'air et au moins une partie supérieure (8) de chambre de combustion creusée dans une culasse (3) du moteur (2), ledit circuit d'admission d'air (5) comprenant la culasse (3), un échangeur thermique (20), un répartiteur d'admission d'air, et au moins une conduite d'admission d'air (10), **caractérisé en ce que** le répartiteur d'admission d'air comprend un plenum (13) formé au moins partiellement par un évidement dans la culasse (3), l'évidement étant recouvert par une bouche de sortie (28) d'air de l'échangeur thermique (20).

2. Circuit d'admission d'air (5) selon la revendication précédente, **caractérisé en ce que** l'évidement est fermé de façon étanche à l'air par la bouche de sortie (28) de l'échangeur thermique (20).

3. Circuit d'admission d'air (5) selon l'une des revendications précédentes, **caractérisé en ce que** le volume de l'évidement est supérieur ou égal au quart d'une cylindrée du moteur (2), voire supérieur ou égal au tiers d'une cylindrée du moteur (2).

4. Circuit d'admission d'air (5) selon l'une des revendications précédentes, **caractérisé en ce que** le plenum (13) comprend au moins une paroi (15) munie d'un déflecteur (18) apte à dévier un flux d'air vers l'au moins une conduite d'admission d'air (10).

5. Circuit d'admission d'air (5) selon la revendication précédente, **caractérisé en ce que** la culasse (3) est destinée à être fixée à un bloc-cylindres (4) d'un moteur (2) selon un plan de joint de culasse (31), l'au moins une partie supérieure (8) de chambre de combustion débouchant dans le plan de joint culasse (31), et **en ce que** le déflecteur (18) est formé par une paroi d'extrémité aval (15) du plenum (13), sensiblement plane et inclinée par rapport au plan de de joint culasse (31).

6. Circuit d'admission d'air (5) selon la revendication précédente, **caractérisé en ce que** la paroi d'extrémité aval (15) comprend une partie inférieure de laquelle débouche l'au moins une conduite d'admission d'air (10).

7. Circuit d'admission d'air (5) selon l'une des revendications 4 à 6, **caractérisé en ce que en ce que** l'au moins une conduite d'admission d'air (10) s'étend selon un premier axe (A1), et **en ce que** le déflecteur (18) est formé par une paroi d'extrémité aval (15) du plenum (13) sensiblement plane et inclinée par rapport à un plan perpendiculaire au premier axe (A1) de sorte à diriger un flux d'air vers l'au moins une conduite d'admission d'air (10).

8. Circuit d'admission d'air (5) selon l'une des revendications précédentes, **caractérisé en ce que en ce que** l'au moins une conduite d'admission d'air (10) s'étend selon un premier axe (A1), et **en ce que** la culasse (3) est destinée à être fixée à un bloc-cylindres (4) d'un moteur (2) selon un plan de de joint culasse (31), l'au moins une partie supérieure (8) de chambre de combustion débouchant dans le plan de de joint culasse (31), le premier axe (A1) formant avec le plan de de joint culasse (31) un angle non nul, notamment pour créer une turbulence d'air de type « tumble » dans l'au moins une partie supérieure (8) de chambre de combustion.

9. Circuit d'admission d'air (5) selon l'une des revendications précédentes, **caractérisé en ce que** l'échangeur thermique (20) comprend un circuit d'eau.

10. Circuit d'admission d'air (5) selon l'une des revendications précédentes, **caractérisé en ce que** ce que l'échangeur thermique (20) est directement fixé contre la culasse (3), notamment **en ce que** l'échangeur thermique comprend une bride (23) fixée contre la culasse (3).

11. Moteur (2) à allumage commandé, **caractérisé en ce qu'**il comprend un circuit d'admission d'air (5) selon l'une des revendications précédentes.

12. Moteur (2) à allumage commandé selon l'une des revendications 10 à 11, **caractérisé en ce que** le volume de l'échangeur thermique (20) est sensiblement égal à une cylindrée du moteur.

13. Véhicule (1) automobile, **caractérisé en ce qu'**il comprend Circuit d'admission d'air (5) selon l'une des revendications 1 à 10 et/ou un moteur (2) à allumage commandé selon l'une des revendications 11 ou 12.
